# EUROPÄISCHE PATENTSCHRIFT

(11) **EP 0 816 467 B1**
(45) Veröffentlichungstag und Bekanntmachung des Hinweises auf die Patenterteilung: **10.03.2004**
(21) Anmeldenummer: 97109820.7
(22) Anmeldetag: 17.06.1997
(51) Int. Cl.: C09K 5/00

(54) **Silikat-, borat- und nitratfreie Gefrierschutzmittelkonzentrate und diese umfassende Kühlmittelzusammensetzungen**
Silicate, borate and nitrate free antifreeze concentrate and refrigerant comprising said antifreeze
Composition d'antigel concentré sans silicate, borate et nitrate et réfrigérant comprenant l'antigel

(30) Priorität: 27.06.1996 DE 19625692
(43) Veröffentlichungstag der Anmeldung: 07.01.1998
(73) Patentinhaber: BASF AKTIENGESELLSCHAFT, 67056 Ludwigshafen (DE)
(72) Erfinder: Meszaros, Ladislaus, 67069 Ludwigshafen (DE); Schrimpf, Hans, 67112 Mutterstadt (DE); Pfitzner, Klaus, Dr., 67063 Ludwigshafen (DE)

(56) Entgegenhaltungen:
- EP-A- 0 229 440
- EP-A- 0 479 470
- EP-A- 0 479 471
- EP-A- 0 487 194
- EP-A- 0 564 721
- WO-A-97/20901

## Beschreibung

Die vorliegende Erfindung betrifft neue silikat-, borat- und nitratfreie Gefrierschutzmittelkonzentrate auf Basis von Alkylenglykolen oder deren Derivaten, welche als Inhibitorkombination im wesentlichen Salze von Carbonsäuren zusammen mit Kohlenwasserstofftriazolen und/oder -thiazolen enthalten. Weiterhin betrifft die Erfindung gebrauchsfertige wäßrige Kühlmittelzusammensetzungen, welche die genannten Gefrierschutzmittelkonzentrate umfassen.

Kühlerschutzmittel für die Kühlkreisläufe von Verbrennungsmotoren, beispielsweise in Automobilen, enthalten meist Alkylenglykole, vor allem Ethylenglykol oder Propylenglykol, als Hauptkomponente. Zur Verwendung im Kühlsystem werden sie mit Wasser verdünnt und sollen neben Frostschutz auch für eine gute Wärmeabfuhr sorgen. Alkylenglykol/Wasser-Mischungen sind allerdings bei den Betriebstemperaturen von Verbrennungsmotoren sehr korrosiv, deswegen müssen die verschiedenen Metalle und deren Legierungen, die im Kühlsystem vorkommen, ausreichend vor den verschiedensten Korrosionsarten, z.B. Lochfraßkorrosion, Spaltkorrosion, Erosion oder Kavitation, geschützt werden. Zur Verwendung als Korrosionsinhibitoren in derartigen Kühlsystemen sind im Stand der Technik bereits eine Vielzahl chemischer Individuen bekannt.

Die Betriebsbedingungen in modernen Verbrennungsmotoren stellen heute bezüglich Temperaturbelastung an den Wärmeübertragungsflächen, Druck und Fließgeschwindigkeit sowie der Werkstoffauswahl sehr viel höhere Ansprüche an das Korrosionsschutzvermögen des Kühlmittels als früher. Neben den bekannten Werkstoffen wie Kupfer, Messing, Weichlot, Stahl und Grauguß werden auch in zunehmendem Maße Aluminiumlegierungen verbaut. In der neuen Patentliteratur findet man deshalb vermehrt die Beschreibung bestimmter Kombinationen von lange bekannten Wirksubstanzen, für die jeweils ein spezielles Wirkungsspektrum beansprucht wird.

So wird in der EP-B 229 440 (1) die Kombination aus dem Salz einer aliphatischen monobasischen C₃-C₁₆-Säure, dem Salz einer dibasischen C₅-C₁₆-Kohlenwasserstoffsäure und einem Kohlenwasserstofftriazol als wirksame Inhibitorformulierung in einem flüssigalkoholischen Gefrierpunktserniedrigungsmittel zum Schutz von Aluminiumlegierungen vor Lochfraß beschrieben. Zusätzlich wird die Mitverwendung weiterer üblicher Inhibitoren wie Alkalimetallborat, -silikat, -benzoat, -nitrat, -nitrit, -molybdat und/oder eines Hydrocarbazols empfohlen.

Aus der EP-A 308 037 (2) sind Gefrierschutzmittel, insbesondere für den Automobilkühlerschutz, bekannt, welche eine Kombination aus einem wasserlöslichen flüssigen alkoholischen Gefrierpunktserniedriger, dem Salz einer C₆-C₁₂-aliphatischen einbasigen Säure, einem Alkalimetallborat und einem Kohlenwasserstofftriazol enthalten, die Metalle vor allem vor Lochfraß schützt, was von Ergebnissen aus elektrochemischen Messungen abgeleitet wird. Auch nach dieser Schrift können weitere übliche Inhibitoren wie Alkalimetallbenzoate, -silikate, -nitrate und -molybdate eingesetzt werden.

Die GB-B 1 004 259 (3) lehrt die Kombination eines Kohlenwasserstofftriazols wie Benzotriazol mit einer Dicarbonsäure wie Sebacinsäure, beispielsweise in Form eines Aminsalzes, als Korrosionsinhibitoren. Zusätzlich wird die Mitverwendung weiterer anorganischer Inhibitoren wie Borax empfohlen.

Aus der EP-A 035 834 (4) ist eine Korrosionsinhibitor-Mischung aus einem Triazol, einem Alkalimetallborat, einem Alkalimetallbenzoat, einem Alkalimetallsilikat und einem Alkalimetallsalz einer C₇- bis C₁₃-Dicarbonsäure bekannt.

Die US-A 4 587 028 (5) lehrt eine silikatfreie Gefrierschutzmittelzusammensetzung, welche als Korrosionsinhibitoren ein Alkalimetallbenzoat, ein Alkalimetallsalz einer C₈- bis C₁₂-Dicarbonsäure sowie ein Alkalimetallnitrat enthält.

In der EP-B 251 480 (6) wird ein Gefrierschutzkonzentrat beschrieben, welches als Korrosionsinhibitoren eine Alkylbenzoesäure oder ein Salz hiervon, eine einbasige aliphatische C₈- bis C₁₂-Säure oder ein Salz hiervon und ein Kohlenwasserstofftriazol enthält. Zusätzlich wird die Mitverwendung von weiteren Inhibitoren wie Alkalimetallboraten, Alkalimetallsilikaten, Alkalimetallnitraten, Alkalimetallnitriten oder Alkalimetallmolybdaten empfohlen.

In der EP-A 369 100 (7) wird eine Mischung aus Decandisäure, Dodecandisäure und Tolutriazol als Korrosionsinhibitor zur Verwendung in einer Kühlmittelzusammensetzung, welche als alkoholischen Gefrierpunktserniedriger Ethylenglykol und Diethylenglykol im Verhältnis 90 : 10 enthält, beschrieben.

Die EP-A 487 194 (8) lehrt Gefrierschutzmittel auf Basis eines gefrierpunktssenkenden Alkohols wie Ethylenglykol, welche eine Mischung aus hydroxylgruppensubstituierten aromatischen Carbonsäuren und aliphatischen Dicarbonsäuren oder den entsprechenden Salzen enthalten.

Es ist bekannt, daß Borate den Korrosionsschutz für Aluminium unter Heißflächenbelastung dramatisch verschlechtern können. Sind Silikate zugegen, tritt dieser negative Effekt nicht auf. Unter optimalen Bedingungen stehen Borat und Silikat also in einem ausbalancierten Verhältnis. Ist das Verhältnis Silikat zu Borat zu gering, verschlechtert sich die korrosionsinhibierende Wirkung der Gesamtmischung. Ein Defizit an Silikat, das ursprünglich in ausreichender Menge in einer Kühlmittelformulierung vorhanden war, kann im Gebrauch auch dadurch entstehen, daß der lösliche Silikatanteil durch Ausfällung unlöslicher Silikatmodifikationen abnimmt, beispielsweise infolge ungenügender Silikatstabilisierung.

Es war deshalb Aufgabe der vorliegenden Erfindung, Inhibitorsysteme für Kühlmittelzusammensetzungen bereitzustellen, die ohne derart empfindliche anorganische Inhibitorsubstanzen, d. h. ohne Salze von anorganischen Säuren, insbesondere ohne Alkalimetallborate und Alkalimetallsilikate, auskommen und einen ausreichenden Korrosionsschutz für alle im Motorbau eingesetzten Metalle, besonders aber für Aluminium unter hohen Heißflächenbelastungen, bewirken.

Demgemäß wurden silikat-, borat- und nitratfreie Gefrierschutzmittelkonzentrate auf Basis von Alkylenglykolen oder deren Derivaten gefunden, welche
(a) 0,05 bis 10 Gew.-%, vorzugsweise 0,1 bis 5 Gew.-%, bezogen auf die Gesamtmenge des Konzentrates, einer Mischung aus einer aliphatischen Monocarbonsäure und einer hydroxylgruppenhaltigen aromatischen Monocarbonsäure mit jeweils 3 bis 16 C-Atomen in Form deren Alkalimetall-, Ammonium- oder substituierten Ammoniumsalze und
(b) 0,01 bis 3 Gew.-%, vorzugsweise 0,05 bis 1 Gew.-%, bezogen auf die Gesamtmenge des Konzentrates, mindestens eines Kohlenwasserstofftriazols und/oder Kohlenwasserstoffthiazols, insbesondere Benzotriazol und/oder Tolutriazol,
enthalten.

In einer bevorzugten Ausführungsform sind die erfindungsgemäßen Gefrierschutzmittelkonzentrate vollkommen frei von jeglichen Salzen anorganischer Säuren, die als Korrosionsinhibitoren wirksam sind. Insbesondere enthalten sie keine Alkalimetallphosphate, keine Alkalimetallmolybdate und keine Alkalimetallnitrite.

Als Komponente (a) wird eine Mischung aus mindestens zwei Carbonsäuren eingesetzt. Liegen in dieser Mischung beispielsweise zwei Carbonsäuren vor, stehen diese üblicherweise im Gew.-% von 1 : 99 bis 99 : 1, vor allem von 3 : 97 bis 97 : 3.

Als lineare und verzweigtkettige aliphatische Monocarbonsäuren kommen insbesondere solche mit 5 bis 12 C-Atomen in Betracht, z.B. Pentansäure, Hexansäure, Octansäure, Nonansäure, Decansäure, Undecansäure, Dodecansäure, 2-Ethylhexansäure und Isononansäure.

Als hydroxylgruppenhaltige aromatische Monocarbonsäuren eignen sich z.B. o-, m- oder p-Hydroxybenzoesäure und o-, m- oder p-(Hydroxymethyl)benzoesäure.

Die genannten Carbonsäuren liegen als Alkalimetallsalze, vor allem als Natrium- oder Kaliumsalze, als Ammoniumsalze oder substituierte Ammoniumsalze (Aminsalze) vor, z.B. mit Trialkylaminen oder Trialkanolaminen.

Die im Sinne der vorliegenden Erfindung einsetzbaren Carbonsäuren tragen in der Regel außer den Carboxylgruppen und gegebenenfalls Hydroxylgruppen keine weiteren funktionellen Gruppen. Allenfalls können diese Carbonsäuren noch Ethersauerstoffatome und/oder Carbonylfunktionen enthalten. Halogensubstituenten und stickstoffunktionelle Gruppierungen wie Nitro oder Amino sind jedoch auszuschließen.

Die erfindungsgemäßen silikat-, borat- und nitratfreien Gefrierschutzmittelkonzentrate können als zusätzliche Korrosionsinhibitoren bis zu 2 Gew.-%, insbesondere 0,001 bis 1 Gew.-%, bezogen auf die Gesamtmenge des Konzentrates, mindestens eines quaternierten Imidazols enthalten. Derartige quaternierte Imidazole sind in der deutschen Patentanmeldung Az. 196 05 509 beschrieben. Beispiele hierfür sind mit Benzylchlorid, Benzylbromid, Methylchlorid, Methylbromid, Ethylchlorid, Ethylbromid, Diethylsulfat oder insbesondere Dimethylsulfat quaterniertes 1-Methylimidazol, 1-Ethylimidazol, 1-(β-Hydroxyethyl)imidazol, 1,2-Dimethylimidazol, 1-Phenylimidazol, Benzimidazol und insbesondere N-Vinylimidazol.

Die erfindungsgemäßen silikat-, borat- und nitratfreien Gefrierschutzmittelkonzentrate können als weitere zusätzliche Korrosionsinhibitoren bis zu 2 Gew.-%, insbesondere 0,001 bis 1 Gew.-%, bezogen auf die Gesamtmenge des Konzentrates, mindestens eines löslichen Salzes des Magnesiums von organischen Säuren, insbesondere von Carbonsäuren, enthalten. Beispiele für solche Magnesiumsalze sind Magnesiumbenzolsulfonat, Magnesiummethansulfonat, Magnesiumacetat und Magnesiumpropionat.

Zusätzlich zu den genannten Inhibitorkomponenten können beispielsweise auch noch Hydrocarbazole in üblichen Mengen eingesetzt werden.

Das Gesamtkorrosionsinhibitorpaket kann, bezogen auf die Gesamtmenge des Konzentrates, bis zu 15 Gew.-%, insbesondere bis zu 10 Gew.-%, ausmachen, wobei die Konzentration an Einzelkomponenten bis zu 10 Gew.-%, insbesondere bis zu 5 Gew.-%, betragen kann.

Die erfindungsgemäßen silikat-, borat- und nitratfreien Gefrierschutzmittelkonzentrate können weiterhin zusätzlich bis zu 1 Gew.-%, insbesondere 0,01 bis 0,5 Gew.-%, bezogen auf die Gesamtmenge des Konzentrates, Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen enthalten.

Der pH-Wert der erfindungsgemäßen silikat-, borat- und nitratfreien Gefrierschutzmittelkonzentrate liegt üblicherweise im Bereich von 7 bis 10, vorzugsweise 7,5 bis 9,5, insbesondere 8,0 bis 9,0. Dabei wird der gewünschte pH-Wert in der Regel durch Zugabe von Alkalimetallhydroxid, Ammoniak oder Aminen zur Formulierung eingestellt, festes Natrium- und Kaliumhydroxid sowie wäßrige Natron- und Kalilauge sind hierfür besonders geeignet.

Die aliphatischen oder aromatischen Monocarbonsäuren werden zweckmäßigerweise gleich als entsprechende Alkalimetallsalze zugegeben, um automatisch im gewünschten pH-Bereich zu liegen, man kann diese Carbonsäuren aber auch als freie Säuren zufügen und dann mit Alkalimetallhydroxid, Ammoniak oder Aminen neutralisieren und den gewünschten pH-Bereich einstellen.

Als flüssigalkoholisches Gefrierpunktserniedrigungsmittel, welches normalerweise den Hauptbestandteil (in der Regel mindestens 80 Gew.-%, insbesondere mindestens 90 Gew.-%) der erfindungsgemäßen Gefrierschutzmittelkonzentrate ausmacht, eignen sich Alkylenglykole oder deren Derivate, insbesondere Propylenglykol und vor allem Ethylenglykol. Daneben kommen jedoch auch noch höhere Glykole und Glykolether in Betracht, z.B. Diethylenglykol, Dipropylenglykol sowie Monoether von Glykolen wie der Methyl-, Ethyl-, Propyl- und Butylether von Ethylenglykol, Propylenglykol, Diethylenglykol und Dipropylenglykol. Es können auch Mischungen der genannten Glykol und Glykolether verwendet werden. Bevorzugt werden Ethylenglykol allein oder Mischungen von Alkylenglykolen, also Ethylenglykol, Propylenglykol, höheren Glykolen und/oder Glykolethern, die mindestens 95 Gew.-% Ethylenglykol enthalten.

Die vorliegende Erfindung betrifft auch gebrauchsfertige wäßrige Kühlmittelzusammensetzungen mit einem erniedrigten Gefrierpunkt, insbesondere für den Kühlerschutz im Automobilbereich, welche Wasser und 10 bis 90 Gew.-%, vorzugsweise 20 bis 60 Gew.-% der erfindungsgemäßen silikat-, borat- und nitratfreien Gefrierschutzmittelkonzentrate umfassen.

## Patentansprüche

1. Silikat-, borat- und nitratfreie Gefrierschutzmittelkonzentrate auf Basis von Alkylenglykolen oder deren Derivaten, enthaltend
(a) 0,05 bis 10 Gew.-%, bezogen auf die Gesamtmenge des Konzentrates, einer Mischung aus einer aliphatischen Monocarbonsäure und einer hydroxylgruppenhaltigen aromatischen Monocarbonsäure mit jeweils 3 bis 16 C-Atomen in Form deren Alkalimetall-, Ammonium- oder substituierten Ammoniumsalze und
(b) 0,01 bis 3 Gew.-%, bezogen auf die Gesamtmenge des Konzentrates, mindestens eines Kohlenwasserstofftriazols und/oder Kohlenwasserstoffthiazols, insbesondere Benzotriazol und/oder Tolutriazol.

2. Silikat-, borat- und nitratfreie Gefrierschutzmittelkonzentrate nach Anspruch 1, welche zusätzlich frei von weiteren Salzen anorganischer Säuren sind.

3. Silikat-, borat- und nitratfreie Gefrierschutzmittelkonzentrate nach den Ansprüchen 1 bis 2, enthaltend zusätzlich bis zu 2 Gew.-%, bezogen auf die Gesamtmenge des Konzentrates, mindestens eines quaternierten Imidazols.

4. Silikat-, borat- und nitratfreie Gefrierschutzmittelkonzentrate nach den Ansprüchen 1 bis 3, enthaltend zusätzlich bis zu 2 Gew.-%, bezogen auf die Gesamtmenge des Konzentrates, mindestens eines löslichen Salzes des Magnesiums von organischen Säuren, insbesondere von Carbonsäuren.

5. Silikat-, borat- und nitratfreie Gefrierschutzmittelkonzentrate nach den Ansprüchen 1 bis 4, enthaltend zusätzlich bis zu 1 Gew.-%, bezogen auf die Gesamtmenge des Konzentrates, Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen.

6. Silikat-, borat- und nitratfreie Gefrierschutzmittelkonzentrate nach den Ansprüchen 1 bis 5 mit einem pH-Wert im Bereich von 7 bis 10.

7. Silikat-, borat- und nitratfreie Gefrierschutzmittelkonzentrate nach den Ansprüchen 1 bis 6 auf der Basis von Ethylenglykol oder Mischungen von Alkylenglykolen, die mindestens 95 Gew.-% Ethylenglykol enthalten.

8. Gebrauchsfertige wäßrige Kühlmittelzusammensetzungen mit einem erniedrigten Gefrierpunkt, welche Wasser und 10 bis 90 Gew.-% eines silikat-, borat- und nitratfreien Gefrierschutzmittelkonzentrates gemäß den Ansprüchen 1 bis 7 umfassen.

## Claims

1. A silicate-, borate- and nitrate-free antifreeze concentrate which is based on alkylene glycols or derivatives thereof and comprises
(a) from 0.05 to 10 % by weight, based on the total amount of concentrate, of a mixture of an aliphatic monocarboxylic acid and a hydroxyl-containing aromatic monocarboxylic acid having in each case 3 to 16 carbon atoms in the form of their alkali metal salts, ammonium salts or substituted ammonium salts, and
(b) from 0.01 to 3 % by weight, based on the total amount of concentrate, of at least one hydrocarbon-triazole and/or hydrocarbon-thiazole, especially benzotriazole and/or tolutriazole.

2. A concentrate as claimed in claim 1, which in addition is free from further salts of inorganic acids.

3. A concentrate as claimed in either of claims 1 and 2, which additionally comprises up to 2 % by weight, based on the total amount of concentrate, of at least one quaternized imidazole.

4. A concentrate as claimed in any of claims 1 to 3, which additionally comprises up to 2 % by weight, based on the total amount of concentrate, of at least one soluble magnesium salt of an organic acid, especially a carboxylic acid.

5. A concentrate as claimed in any of claims 1 to 4, which additionally comprises up to 1 % by weight, based on the total amount of concentrate, of hard water stabilizers based on polyacrylic acid, polymaleic acid, acrylic acid-maleic acid copolymers, polyvinylpyrrolidone, polyvinylimidazole, vinylpyrrolidone-vinylimidazole copolymers and/or copolymers of unsaturated carboxylic acids and olefins.

6. A concentrate as claimed in any of claims 1 to 5 with a pH of 7-10.

7. A concentrate as claimed in any of claims 1 to 6 which is based on ethylene glycol or mixtures of alkylene glycols comprising at least 95 % by weight ethylene glycol.

8. A ready-to-use aqueous coolant composition of reduced freezing point which comprises water and 10-90 % by weight of a concentrate as claimed in any of claims 1 to 7.

## Revendications

1. Concentrés d'antigel exempts de silicates, de borates et de nitrates à base d'alkylèneglycoles ou de leurs dérivés contenant
a) 0,05% à 10% en poids, par rapport à la quantité totale du concentré d'un mélange d'un acide monocarboxylique aliphatique et d'un acide monocarboxylique aromatique contenant des groupes hydroxyle, ayant chacun 3 à 16 atomes de C, sous la forme de leurs sels de métaux alcalins, d'ammonium ou d'ammonium substitué et
b) 0,01% à 3% en poids, par rapport à la quantité totale du concentré mis en oeuvre, d'au moins un triazole d'hydrocarbure et/ou d'un thiazole d'hydrocarbure, en particulier d'un benzotriazole et/ou d'un tolutriazole.

2. Concentrés d'antigel exempts de silicates, de borates et de nitrates selon la revendication 1 qui sont, en plus, exemptes d'autres sels d'acides organiques.

3. Concentrés d'antigel exempts de silicates, de borates et de nitrates selon la revendication 1 ou 2, contenant en outre jusqu'à 2% en poids, par rapport à la quantité totale de concentré, d'un imidazole quaternisé.

4. Concentrés d'antigel exempts de silicates, de borates et de nitrates selon l'une quelconque des revendications 1 à 3, contenant en outre jusqu'à 2% en poids, par rapport à la quantité totale de concentré, d'au moins un sel de magnésium soluble d'acides organiques, en particulier d'acides carboxyliques.

5. Concentrés d'antigel exempts de silicates, de borates et de nitrates selon l'une quelconque des revendications 1 à 4, contenant en outre jusqu'à 1% en poids, par rapport à la quantité totale de concentré, de stabilisants d'eau dure à base de poly(acide acrylique), de poly(acide maléique), de copolymères acide acrylique/acide maléique, de polyvinylpyrrolidone, de polyvinylimidazole, de copolymères vinylpyrrolidone/vinylimidazole et/ou de copolymères d'acides carboxyliques insaturés et d'oléfines.

6. Concentrés d'antigel exempts de silicates, de borates et de nitrates selon l'une quelconque des revendications 1 à 5, présentant un pH allant de 7 à 10.

7. Concentrés d'antigel exempts de silicates, de borates et de nitrates selon l'une quelconque des revendications 1 à 6 à base d'éthylèneglycol ou de mélanges d'alkylèneglycols contenant au moins 95% en poids d'éthylèneglycol.

8. Formulations aqueuses de réfrigérant prêtes à l'emploi possédant un point de congélation abaissé, qui contiennent de l'eau et de 10 à 90% en poids d'une composition concentrée d'antigel exempte de silicates, de borates et de nitrates selon les revendications 1 à 7.
